# EUROPEAN PATENT SPECIFICATION

(11) **EP 3 300 683 B1**
(45) Date of publication and mention of the grant of the patent: **20.01.2021**
(21) Application number: 16191788.5
(22) Date of filing: 30.09.2016
(51) Int. Cl.: A61C 1/00

(54) **A CONDUIT ARRANGEMENT OF A FLUID DISTRIBUTOR DEVICE AND A METHOD FOR CLEANING A CONDUIT ARRANGEMENT OF A FLUID DISTRIBUTOR DEVICE**
LEITUNGSANORDNUNG EINER FLUIDVERTEILUNGSVORRICHTUNG UND VERFAHREN ZUR REINIGUNG EINER LEITUNGSANORDNUNG EINER FLUIDVERTEILUNGSVORRICHTUNG
SYSTÈME DE CONDUIT D'UN DISPOSITIF DE DISTRIBUTION DE FLUIDE ET PROCÉDÉ DE NETTOYAGE D'UN SYSTÈME DE CONDUIT D'UN DISPOSITIF DE DISTRIBUTION DE FLUIDE

(43) Date of publication of application: 04.04.2018
(60) Divisional application: 20173372.2
(73) Proprietor: Ferton Holding S.A., 2800 Delémont (CH)
(72) Inventor: Lebreton, Etienne, 1023 Crissier (CH)
(74) Representative: Müller Schupfner & Partner Patent- und Rechtsanwaltspartnerschaft mbB

(56) References cited:
- WO-A1-2008/018667
- US-B1- 6 253 964
- US-B1- 6 350 123
- US-B1- 6 464 868

## Description

The present invention refers to a conduit arrangement of a fluid distributing device and to a method for cleaning the conduit arrangement of a fluid distributing device.

Fluid distributing devices are needed for example for ultrasonic scaling devices which request irrigation liquid in order to wash/cool a patient's teeth, or for dental powder jet devices, which act with an air-powder mixture and water or a rinsing fluid. Fluid distributing devices are especially needed for combi-devices, including an ultrasonic scaling device and a dental powder jet device, such as for example the AIR-FLOW® MASTER PIEZON® device of the applicant. After use, in particular after a working day, a fluid distributing device needs to be cleaned or disinfected.

Usually a conduit arrangement for a fluid distributing device is provided with a first liquid flow conduit for providing a liquid such as water or an irrigation liquid or the like at one hand piece, such as the hand piece of the scaler unit, with a gas flow conduit for providing a gas such as air or a gas-powder mixture for powder blasting at another hand piece, which other hand piece is usually also connected to a second liquid flow conduit for providing a liquid such as water, being also connected to the conduit arrangement. The second liquid surrounds the gas or the gas-powder mixture once it has left the nozzle of the second hand piece. After use of the conduit arrangement of the fluid distributing device all day long the conduit arrangement, more precisely the liquid flow conduits, should be cleaned or disinfected as well.

Some known conduit arrangements of a fluid distributing device only provide a method to clean the first liquid flow conduit, while the second liquid flow conduit associated with the gas flow conduit is not cleaned at all. Since however, through the second liquid flow conduit a liquid for helping the appliance of the powder to a patient's teeth is usually provided, the second liquid flow conduit needs to be cleaned as well.

WO 2008/018667 A1, US 6,253,964 B1 and US 6,350,123 B1 disclose a conduit arrangement of a fluid distributing device, wherein the conduit arrangement comprises a source fluid inlet, connected to a source fluid conduit for guiding a source fluid entering through the source fluid inlet to an outlet such as a connector for a dental handpiece, an air pressure inlet to guide compressed air from an air supply into a container and a plurality of valves, each having a first and a second state wherein each valve is associated with at least one of the source or air conduits and a controller which is configured to switch each of the valves from a first state to a second state and vice versa for allowing or preventing, respectively, the source fluid or the pressurized air to enter the corresponding source fluid conduit.

US 6,253,964 B1 and US 6,350,123 B1 as well as US 6,464,868 B1 additionally disclose a container for a disinfecting liquid which can be lead through a container fluid conduit to the source fluid conduit and the outlet in order to disinfect the source fluid conduit, wherein such container fluid conduit is as well controlled by such controller.

Many cleaning methods for cleaning liquid flow conduits are time consuming. This however burdens the risk that the user is discouraged after a time and bypasses the cleaning process and as a result remaining amounts of the corresponding irrigation fluid or medical fluid is left in the corresponding conduit. This can result of deposits of limestone which are favorite places for biofilm growth, which is to be avoided.

It is an object of the invention to provide a conduit arrangement of a fluid distributing device which enables a quick cleaning process and to provide a quick cleaning process of a fluid distributing device. The device and the method should thereby overcome the drawbacks of the prior art devices and cleaning methods.

This object is achieved by a conduit arrangement of a fluid distributing device according to claim 1 and a cleaning method according to claim 4. Advantageous embodiments of the present invention are described in the dependent claims.

According to the present invention a conduit arrangement of a fluid distributing device is provided, wherein the conduit arrangement comprises:
1. a source fluid inlet connected to a source fluid conduit for guiding a source fluid entering through the source fluid inlet to an outlet which is preferably detachably connected or detachably connectable to at least one hand piece of the fluid distributing device,
2. a container fluid inlet connected to a container fluid conduit for guiding a container fluid entering through the container inlet to an outlet which is preferably detachably connected or detachably connectable to at least one hand piece of the fluid distributing device.
3. The conduit arrangement comprises a plurality of valves each having a first and a second open state, and wherein each valve is associated with at least one of the conduits, and a controller configured to switch each of the valves from the first state to the second state and vice versa for allowing or preventing, respectively, the container fluid or the source fluid to enter the corresponding conduit.

The proposed conduit arrangement further comprises a gas fluid inlet being in fluid connection with the container fluid conduit for guiding a gas fluid entering through the gas fluid inlet to an inlet of the container for enhancing the pressure in the container and releasing the container fluid into the container conduit according to the present invention, a controller and a plurality of valves, wherein each valve is associated with a certain conduit or a part of a certain conduit such that the controller can control the valves individually to switch between the first and the second state and vice versa, preferably, to open or to close the fluid flow for the corresponding fluid.

The controller has stored a certain pattern for switching between the first and the second state and vice versa, preferably for opening and closing the valves such that the fluid flow for the corresponding fluid is controlled, in order to allow the container fluid to flush the source conduit and/or the container conduit, preferably all the way to the hand pieces. The conduit arrangement according to the invention allows to clean all the conduits of the arrangement, especially the first and second liquid flow lines which lead to the first and second hand piece. In particular it allows to clean all the conduits in a short time compared to the usual time needed for cleaning. The term "short time" is to be understood in the sense that an operator performing the cleaning needs to be present only for the short time.

According to the present invention of the conduit arrangement the controller is configured to work in a normal use mode, in which the plurality of valves is switched such that the fluid distributing device is usable for a normal use or to work in a cleaning mode, in which the plurality of valves is switched such that the fluid distributing device is usable in a cleaning mode for cleaning the conduits. Preferably, the controller is positioned inside the fluid distributing device. More preferably the controller stores different programs associated with the normal use mode and/or associated the cleaning mode. The programs store different time slots according to which the different valves are switched to the first or the second state, preferably opened or closed, for allowing the respective fluid to enter the respective conduit.

In a preferred embodiment the plurality of valves comprises electronical valves for allowing a switching of the valves by the controller. In particular the valves are electronical-mechanical valves or the like. In normal use, when the container is attached to the fluid distributing device the valve or the valves associated with the container fluid conduit are switched to the first state, preferably the opened state, automatically according to the present invention, i.e. an electronical-mechanical can be used.

During normal use at least one conduit is for guiding a liquid flow to at least one hand-piece. Furthermore, during normal use at least one conduit, preferably the second conduit, is for guiding a second liquid flow and/or a powder flow to at least one hand-piece, preferably the second hand-piece. In the normal use mode usually one hand piece, such as the hand-piece for the scaler, is supplied with a container fluid that comprises a medical solution or, if the container is absent or empty, with the source fluid, while another hand piece, such as the powder jet hand-piece, is supplied with the source fluid being tap water or the like. The source fluid can therefore be used for both hand-pieces, if needed.

Preferably, the fluid distributing device comprises a pedal or another inputting device, for inputting at least one command to the controller. By using the pedal of a foot switch, for example, directly after having pushed a start button or a cleaning mode combination of buttons, of the fluid distributing device, the controller can be started to work in its cleaning mode. This has the advantage that the cleaning mode can be entered quickly and easily. No waiting of the operator is needed.

According to the present invention a container comprising a container fluid is connectable to the container inlet and by connecting the container to the container inlet, the valves are automatically switched to the first state for allowing a container fluid flow into the container conduit during the normal use according to the present invention. This has the advantage that the container fluid is automatically used when the controller is in the normal use mode. When the controller is switched to the cleaning mode the controller is configured to control the switching of the valves, preferably to suppress the automatically switching.

According to a second aspect of the present invention a method for cleaning a conduit arrangement of a fluid distributing device using a conduit arrangement as proposed, wherein the method for cleaning the conduit arrangement comprises the steps of:
1. connecting a container inlet of the conduit arrangement with a container providing a container fluid to a container conduit, and
2. connecting a source fluid inlet of the conduit arrangement with a source providing a source fluid to a source conduit,
3. activating a cleaning mode stored in a controller, wherein the controller is configured to switch a plurality of valves each being associated with at least one of the conduits such that the container fluid is flushed into the container conduit and at least partly into the source conduit one after the other according to a certain pattern.

The activating of the cleaning mode can be started by pushing a pedal of the fluid distributing device right after having pushed a start button of the fluid distributing device. The method provides an easy and quick access and/or performance of the cleaning process as such, in particular for the operator.

Preferably the valves can be switched between a first state and a second state and vice versa for allowing or preventing a fluid flow in a certain conduit. In particular the first state is a state in which the valves allow a fluid flow of a certain fluid and the second state is a state in which the valves prevent the same and enables the flow of another fluid.

Preferably the certain pattern comprises the step of switching the valve associated to the container conduit to the first state allowing the source fluid to enter into the source conduit. The certain pattern further comprises the step of switching the valve associated to the source conduit to the first state allowing the container fluid to enter into the container conduit. Furthermore, the certain pattern comprises the step of switching the valve associated to the container conduit to the second state and switching a valve associated with the source conduit to the first state in order to let flush a predetermined amount of the source fluid into the source conduit that thereby displaces a remaining container fluid into the source conduit. In this way the container fluid is enabled to enter the container conduit and, preferably at least partly, the source conduit, in particular while the controller works in the cleaning mode.

Preferably the certain pattern comprises the step of switching back the valve associated to the container conduit to the first state and switching the valve associated with the source conduit to the second state in order to let flush the container fluid into the container conduit, in order to obtain the container conduit and a part of the source conduit to be filled with the container fluid. The container conduit and a part of the source conduit both filled with the container fluid can be left with the container fluid inside over a period of time, preferably overnight. The container fluid comprises in this case in particular a disinfectant which disinfect the conduits overnight. Preferably, the afore-mentioned steps are preformed one after the other in a desired order.

The above switching can be repeated, several times, if necessary, depending on the lengths of the conduits, according to the certain pattern stored in the controller. At the end of the cleaning process the certain pattern comprises the step of switching the valve associated to the container conduit to the first state and switching the valve associated with the source conduit to the first state one after the other in order to let flush the source fluid into the container conduit and the source conduit respectively for starting the normal use of the fluid distributing device. After preforming the method of cleaning the conduit arrangement the conduit arrangement can be used in normal mode again wherein the conduit arrangement is being disinfected. The disinfecting of the conduit arrangement is performed automatically, preferably overnight, without needing the operator to be present. This has the advantage that the risk of having a discouraged operator is reduced. Preferably the predetermined amount of the source fluid is controlled by switching the valve associated to the source conduit to the first state for a short time, in particular for a few seconds only. In particular the valve associated to the source conduit is switched to the first state, preferably opened, for one second or less than one second, in order to allow only a small amount of source fluid, i.e. in particular of tap water, to enter the source conduit, which then displaces the remaining container fluid into the container conduit. More preferably, the short opening depends on the length of the source conduit. The longer the source conduit is, the longer will the valve associated to the source conduit be switched to the first state. Preferably the steps of the method are performed one after the other, in particular as often and/or as long as needed. The repetition rate and/or the duration of a single step of the method depends in particular on the flow rated, by which the corresponding liquid may pass through the valve and/or may depend on the length of the corresponding conduit.

In a preferred embodiment the method comprises the step of providing a container comprising a cleaning fluid, in particular a disinfecting fluid. The cleaning fluid comprises preferably a peroxide (H₂O₂ - solution) or a solution comprising a polyhexanid betaine complex for disinfecting the conduits overnight.

In the following, the invention is described based on preferred embodiments which are schematically shown in the enclosed figures:
- **Fig. 1**: shows a functional scheme of how to start the cleaning mode;
- **Fig. 2**: shows a functional scheme of how to finish the cleaning mode;
- **Fig. 3**: shows a circuit sketch of the conduit arrangement comprising the plurality of valves;
- **Fig. 4**: shows a circuit sketch of the conduit arrangement in a step 1;
- **Fig. 5**: shows a circuit sketch of the conduit arrangement in a step 2;
- **Fig. 6**: shows a circuit sketch of the conduit arrangement in a step 3;

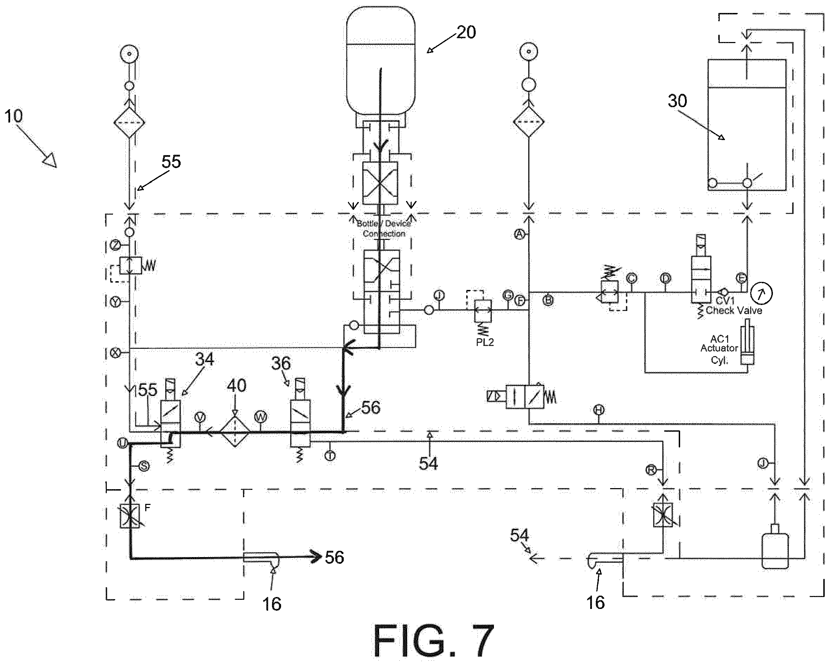

- **Fig. 7**: shows a circuit sketch of the conduit arrangement in a step 4.

Equal or equally acting elements are in all figures identified by the same reference numerals.

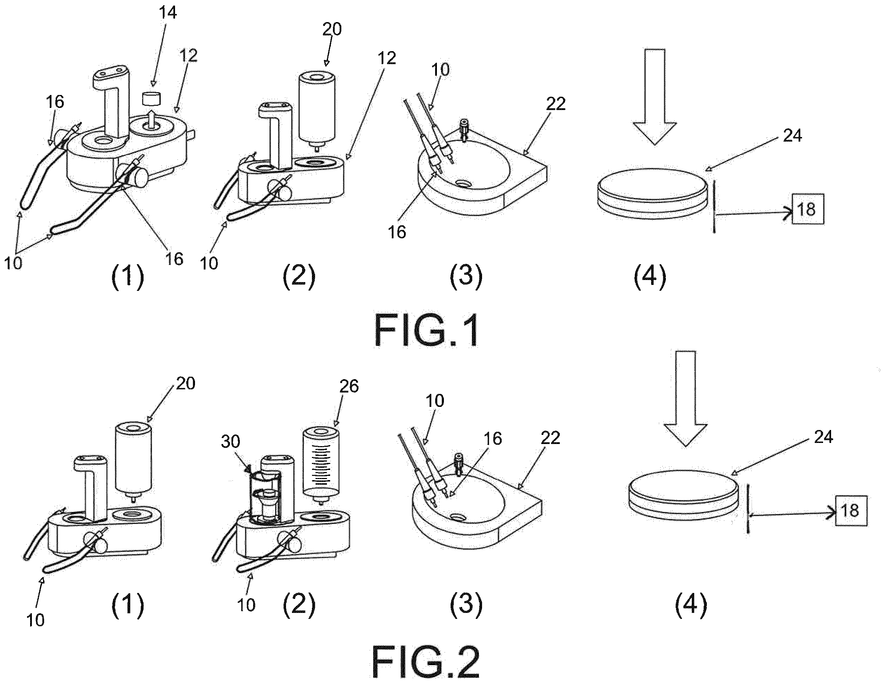

Fig. 1 shows the phases recommended to perform for starting the cleaning method proposed by the present invention of the conduit arrangement 10 of a fluid distributing device 12. A conduit cover 14 is removed from the fluid distributing device 12 in phase 1. In phase 2 a container 20 comprising preferably a medical solution and in particular a disinfectant is connected to the fluid distributing device 12. In phase 3 the two hand pieces 16 connected to the fluid distributing device 12 are placed over a sink 22 so as to allow the fluid to be passed into the sink. In phase 4 the fluid distributing device 12 is switched on and the pedal 24 of the fluid distributing device 12 is pushed in order to activate the cleaning mode of the controller 18. Over a period of time, in particular overnight, the cleaning may be performed without needing an operator aside.

Fig. 2 demonstrate the phases recommended to finish the cleaning mode and to switch over to a normal use mode. In a first phase the container that has comprised the container fluid and which is empty after cleaning is removed from the fluid distributing device 12. A container 26 comprising a medical solution or just water is connected to the fluid distributing device 12 instead. Furthermore, a powder container 30 comprising a medical powder is connected to the fluid distributing device 12. In Phase 3, while the two hand pieces 16 connected to the fluid distributing device 12 are still placed over the sink 22. The fluid distributing device 12 is switched on and in phase 4 the pedal 24 is pushed. The pedal 24 communicates with the controller 18 to exit the cleaning mode and to switch back to a normal use mode. In doing so, the controller 18 switches the valves 34 and 36 in a way that the container fluid conduit 45 and the source fluid conduit 43 are both flushed one after the other by the container fluid or the source fluid. As a result the disinfectant is removed from the conduits 43, 45, so that the fluid distributing device 12 is ready for the normal use mode.

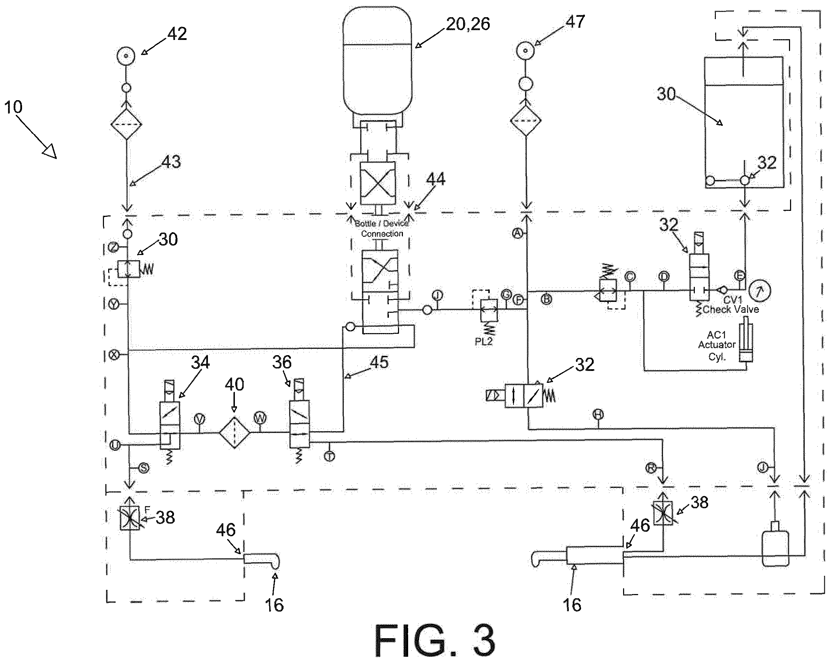

Fig. 3 shows a schematic view of the circuit of the conduit arrangement 10. The circuit comprises a plurality of valves 32, which are not referred to in detail in order to concentrate on the core of the present invention. The plurality of valves 32 comprises at least one valve 34 associated with the source fluid conduit 43 and at least one valve 36 associated with the container fluid conduit 45. Between the two valves 34, 36 a heater 40 for heating the fluid is positioned. In the normal use mode a powder container 30 and a container 26 comprising a medical solution are connected to the fluid distributing device 12. In the cleaning mode the powder container 30 is removed and the container 26 is replaced by container 20 comprising a cleaning fluid such as an peroxide or a solution comprising a polyhexanid betaine complex for disinfecting the conduits.

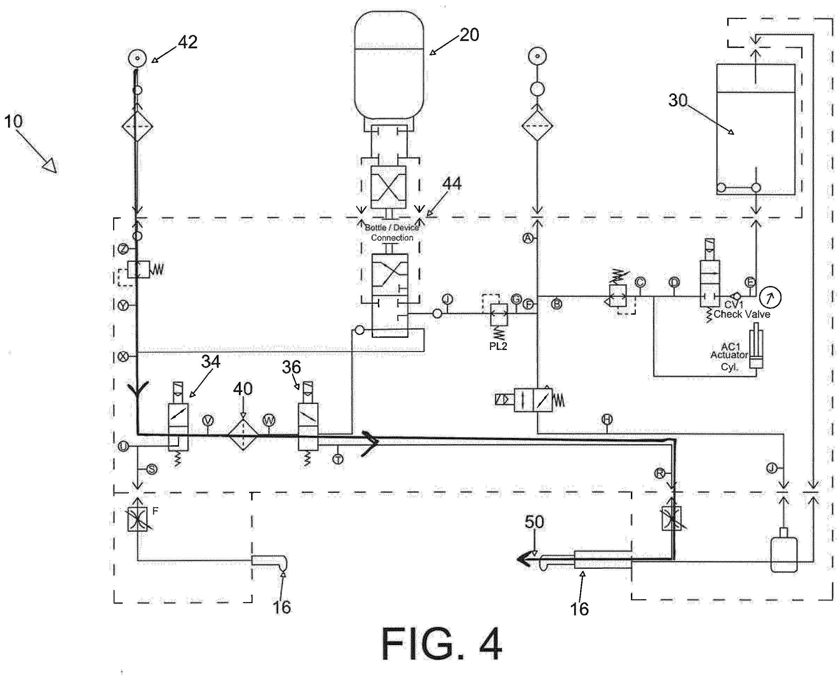

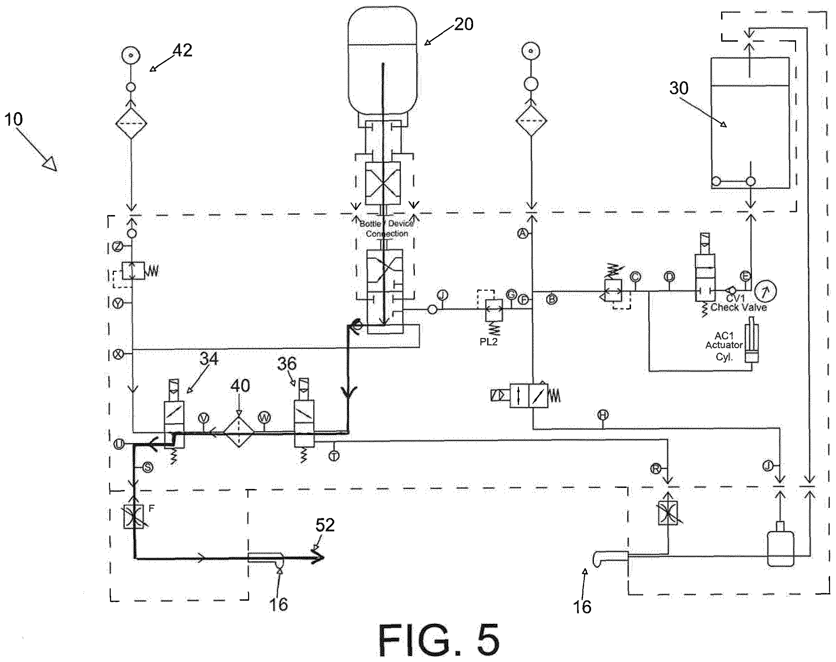

When activating the cleaning mode in a first step shown in Fig. 4 the valve 36 valve associated with the container conduit is switched to the first state or opened while the valve 34 is switched to the second state or closed and the source fluid entering through the source inlet 42 is allowed to enter the conduit arrangement 10 until the outlet 46 is reached. The fluid flow of the first step is indicated by the reference sign 50. In the second step shown in Fig. 5 the container 20 comprising a disinfecting solution is connected to the fluid distributing device 12. At the same time an external gas entering through the gas fluid inlet 47 is guided into the container 20. In the second step the valve 34 associated with the source conduit is switched to the first state or opened while the valve 36 is switched to the second state or closed and the container fluid entering through the container inlet 44 is allowed to enter the conduit arrangement 10 until the outlet 46 is reached. The fluid flow in the second step is indicated by the reference sign 52.

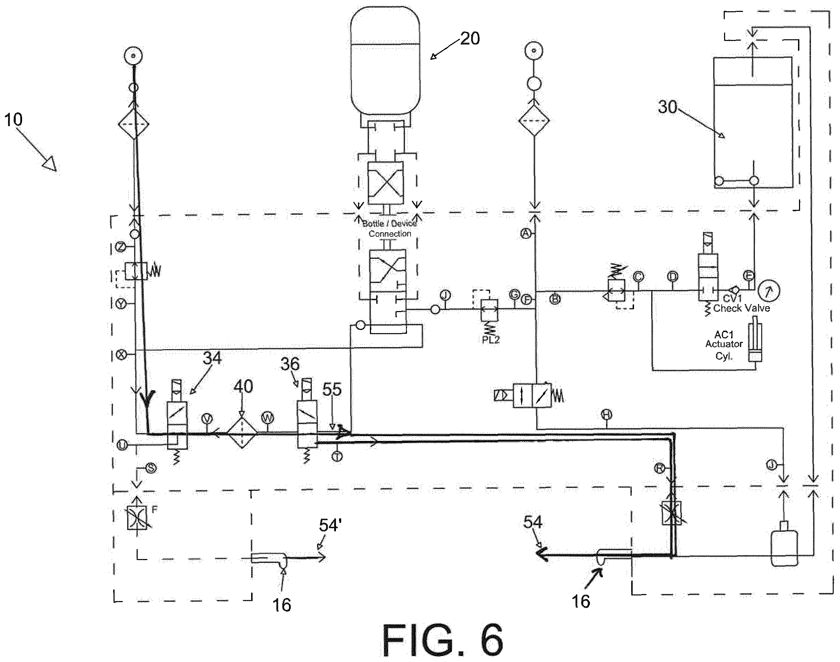

In the third step shown in Fig. 6 the valve 36 is opened for a short time, so that the source fluid entering through the source inlet 42 may displace the container fluid into the conduit leading to the other hand piece 16. Such displacement of the container fluid is indicated by the solid reference arrow 54. The remaining container fluid in the hand piece 16 is indicated by the dashed arrow 54'. The solid reference arrow 55 indicates the source fluid that displaces the container fluid. When enough source fluid has entered after a short time the valve 36 is switched to the second state, preferably closed, while the valve 34 is switched to the first state, preferably opened again. By doing so, the container fluid may enter the conduit arrangement 10 as indicated by the solid arrow 56, while the remaining source fluid from step 3 is indicated by dashed line arrow 55 and the remaining container fluid from step 3 is indicated by dashed line arrow 54.

It is possible to arrange the valves 34, 36 or the conduits 43, 45 so that a vice versa switching of the valves 34, 36 as just described needs to be performed for ending at the same result.

The core of the present invention is that for cleaning the conduit arrangement 10 the plurality of valve 32, 34, 36 are switched between the first and the second state and vice versa, preferably opened and closed, according to the described pattern, so that the disinfectant fluid may enter the conduits 43, 45. The disinfectant fluid is kept overnight in the conduits 43, 45. When starting again the work in the normal use mode, the conduits 43, 45 are flushed with water for removing the disinfectant fluid.

### Reference signs

- 10: conduit arrangement
- 12: fluid distributing device
- 14: conduit cover
- 16: hand piece
- 18: controller
- 20: container
- 22: sink
- 24: pedal
- 26: container
- 30: powder container
- 32: plurality of valves
- 34: valve associated with the source conduit
- 36: valve associated with the container conduit
- 38: manual fluid flow regulator
- 40: heater
- 42: source fluid inlet
- 43: source fluid conduit
- 44: container fluid inlet
- 45: container fluid conduit
- 46: outlet
- 47: gas fluid inlet
- 50: fluid flow of source fluid in the first step
- 52: fluid flow of container fluid in the second step
- 54': remaining fluid flow of container fluid from the second step
- 54: fluid flow of container fluid in the third step
- 55: fluid flow of source fluid in the third step
- 56: fluid flow of container fluid in the fourth step

## Claims

1. A conduit arrangement (10) of a fluid distributing device (12), the conduit arrangement (10) comprises:
- a source fluid conduit (43) and an outlet (46),
- a container fluid conduit (45) for guiding a container fluid entering through a container fluid inlet (44) to said outlet (46),
- a source fluid inlet (42) connected to said source fluid conduit (43) for guiding a source fluid entering through the source fluid inlet (42) to said outlet (46),
- said container fluid inlet (44) being connected to said container fluid conduit (45)
- a gas fluid inlet (47) being in fluid connection with the container fluid conduit (45) for guiding a gas fluid entering through the gas fluid inlet (47) to an inlet of the container (20) for releasing the container fluid into the container fluid conduit (45),
- a plurality of valves including at least a valve (34) associated with the source fluid conduit and a valve (36) associated with the contained fluid conduit, each valve having a first and a second state and
a controller (18) configured to switch each of the valves (32, 34, 36) from the first state to the second state and vice versa for allowing or preventing, respectively, the container fluid or the source fluid to enter the corresponding conduit (43, 45), wherein the controller (18) is configured
a. to work in a normal use mode, in which the plurality of valves (32, 34, 36) is switched such that the fluid distributing device (12) is usable for a normal use, wherein during normal use at least one conduit (43, 45) is for guiding a liquid flow to at least one hand piece (16), and at least one conduit (43, 45) is for guiding a second liquid flow and/or a powder flow to at least one hand piece (16) or
b. to work in a cleaning mode, in which the plurality of valves (32, 34, 36) is switched such that the fluid distributing device (12) is usable in a cleaning mode for cleaning the conduits (43, 45) and
wherein a container (20, 26), comprising a container fluid, is connectable to the container inlet (44) and **characterized in that** by connecting the container (20, 26) to the container inlet (44), the valves (32, 34, 36) are automatically, switched to the first state for allowing a container fluid flow during the normal use into the container conduit.

2. A conduit arrangement (10) according to claim 1,
wherein the plurality of valves (32, 34, 36) comprises electronical valves for allowing a switching of the valves (32, 34, 36) by the controller (18).

3. A conduit arrangement (10) according to one of the preceding claims,
wherein the fluid distributing device (12) comprises a pedal (24) for inputting at least one command to the controller (18).

4. Method for cleaning a conduit arrangement (10) of a fluid distributing device according to one of the claim 1 to 4, wherein the method for cleaning the conduit arrangement (10) comprises the steps of
connecting said container fluid inlet (44) of the conduit arrangement (10) with a container (20) providing a container fluid to a container conduit (45), connecting said source fluid inlet (42) of the conduit arrangement (10) with a source providing a source fluid to said source conduit (43), and
connecting said gas fluid inlet (47) of the conduit arrangement (10) with the container fluid conduit (45) for guiding a gas fluid entering through the gas fluid inlet (47) to an inlet of the container (20) for releasing the container fluid into the container fluid conduit (45), activating a cleaning mode stored in said controller (18), wherein the controller (18) is configured to switch the plurality of valves (32, 34, 36) each being associated with at least one of the conduits (43, 45) such that the container fluid is flushed into the container conduit (45) and at least partly into the source conduit (43) one after the other according to a certain pattern.

5. Method according to claim 4, wherein the valves (32, 34, 36) can be switched between a first state and to a second state and vice versa for allowing or preventing a fluid flow.

6. Method according to claim 5, wherein the certain pattern comprises the step of switching the valve (36) associated to the container conduit to the first state allowing the source fluid to enter into the source conduit (43).

7. Method according to one of the claims 4 to 6, wherein the certain pat- tern comprises the step of switching the valve (34) associated to the source conduit to the fist state allowing the container fluid to enter into the container conduit (45).

8. Method according to one of the claims 4 to 7, wherein the certain pattern comprises the step of switching the valve (34) associated to the source conduit to the second state and switching the valve (36) associated with the container conduit to the first state in order to let flush a predetermined amount of the source fluid into the source conduit (43), that thereby displaces the remaining container fluid into the source conduit (43), in particular into a part (54) of the source conduit (43) and/or the step of switching back the valve (34) associated to the source conduit to the first state and switching the valve (36) associated with the container conduit to the second state in order to let flush the container fluid into the container conduit (45), in order to obtain the container conduit (45) and a part (54) of the source conduit (43) to be filled with the container fluid.

9. Method according to one of the claims 5 to 8, wherein the certain pat- tern comprises the step of opening the valve (36) associated to the con- tainer conduit and opening the valve (34) associated with the source conduit one after the other in order to let flush the source fluid into the container conduit (45) and the source conduit (43) respectively for starting the normal use of the fluid distributing device (12).

10. Method according to claim 9, wherein a predetermined amount of the source fluid is controlled by opening the valve (36) associated to the container conduit for a short time, in particular for a few seconds only.

11. Method according to one of the claims 4 to 10, wherein the method comprises the step of providing a container (20) comprising a cleaning fluid, in particular a disinfecting fluid.

## Patentansprüche

1. Leitungsanordnung (10) einer Fluidverteilervorrichtung (12), wobei die Leitungsanordnung (10) Folgendes umfasst:
- eine Quellfluid-Leitung (43) und einen Auslass (46),
- eine Behälterfluid-Leitung (45) zum Leiten eines durch einen Behälterfluideinlass (44) einströmenden Behälterfluids zu dem Auslass (46),
- einen mit der Quellfluid-Leitung (43) verbundenen Quellfluid-Einlass (42) zum Leiten eines durch den Quellfluid-Einlass (42) einströmenden Quellfluids zu dem Auslass (46),
- wobei der Behälterfluid-Einlass (44) mit der Behälterfluid-Leitung (45) verbunden ist,
- einen Gasfluid-Einlass (47), der in fluidleitender Verbindung mit der Behälterfluid-Leitung (45) steht, zum Leiten eines durch den Gasfluideinlass (47) einströmenden Gasfluids zu einem Einlass des Behälters (20) zum Freisetzen des Behälterfluids in die Behälterfluid-Leitung (45),
- eine Mehrzahl von Ventilen einschließlich mindestens eines Ventils (34), das der Quellfluid-Leitung zugeordnet ist, und eines Ventils (36), das der Behälterfluid-Leitung zugeordnet ist, jedes Ventil mit einem ersten und einem zweiten Status, und
eine Steuerung (18), die zum Umschalten von jedem der Ventile (32, 34, 36) aus dem ersten Status in den zweiten Status und umgekehrt konfiguriert ist, um zu ermöglichen bzw. zu verhindern, dass das Behälterfluid oder das Quellfluid in die entsprechende Leitung (43, 45) einströmt, wobei
die Steuerung (18) konfiguriert ist,
a. um in einem normalen Gebrauchsmodus zu arbeiten, in dem die Mehrzahl von Ventilen (32, 34, 36) so geschaltet ist, dass die Fluidverteilervorrichtung (12) für einen normalen Gebrauch verwendbar ist, wobei während des normalen Gebrauchs mindestens eine Leitung (43, 45) dazu dient, einen Flüssigkeitsstrom zu mindestens einem Handstück (16) zu leiten, und mindestens eine Leitung (43, 45) dazu dient, einen zweiten Flüssigkeitsstrom und/oder einen Pulverstrom zu mindestens einem Handstück (16) zu leiten, oder
b. um in einem Reinigungsmodus zu arbeiten, in dem die Mehrzahl von Ventilen (32, 34, 36) so geschaltet ist, dass die Fluidverteilervorrichtung (12) in einem Reinigungsmodus zum Reinigen der Leitungen (43, 45) verwendbar ist, und
wobei ein Behälter (20, 26), der ein Behälterfluid umfasst, mit dem Behältereinlass (44) verbindbar ist, und **dadurch gekennzeichnet, dass** durch Verbinden des Behälters (20, 26) mit dem Behältereinlass (44) die Ventile (32, 34, 36) automatisch in den ersten Status geschaltet werden, um einen Behälterfluidstrom während des normalen Gebrauchs in die Behälterleitung zu ermöglichen.

2. Leitungsanordnung (10) nach Anspruch 1,
wobei die Mehrzahl von Ventilen (32, 34, 36) elektronische Ventile umfasst, um ein Schalten der Ventile (32, 34, 36) durch die Steuerung (18) zu ermöglichen.

3. Leitungsanordnung (10) nach einem der vorhergehenden Ansprüche,
wobei die Fluidverteilervorrichtung (12) ein Pedal (24) zum Eingeben von mindestens einem Befehl an die Steuerung (18) umfasst.

4. Verfahren zum Reinigen einer Leitungsanordnung (10) einer Fluidverteilervorrichtung nach einem der Ansprüche 1 bis 4, wobei das Verfahren zum Reinigen der Leitungsanordnung (10) die folgenden Schritte umfasst:
Verbinden des Behälterfluid-Einlasses (44) der Leitungsanordnung (10) mit einem Behälter (20), der ein Behälterfluid an eine Behälterleitung (45) bereitstellt,
Verbinden des Quellfluid-Einlasses (42) der Leitungsanordnung (10) mit einer Quelle, die ein Quellfluid für die Quellleitung (43) bereitstellt, und
Verbinden des Gasfluid-Einlasses (47) der Leitungsanordnung (10) mit der Behälterfluid-Leitung (45) zum Leiten eines durch den Gasfluid-Einlass (47) einströmenden Gasfluids zu einem Einlass des Behälters (20) zum Freisetzen des Behälterfluids in die Behälterfluid-Leitung (45), Aktivieren eines in der Steuerung (18) gespeicherten Reinigungsmodus, wobei die Steuerung (18) zum Umschalten der Mehrzahl von Ventilen (32, 34, 36) konfiguriert ist, die jeweils mindestens einer der Leitungen (43, 45) so zugeordnet ist, dass das Behälterfluid nacheinander nach einem bestimmten Muster in die Behälterleitung (45) und mindestens teilweise in die Quellleitung (43) gespült wird.

5. Verfahren nach Anspruch 4, wobei die Ventile (32, 34, 36) zwischen einem ersten Status und einem zweiten Status und umgekehrt umgeschaltet werden können, um einen Fluidstrom zuzulassen oder zu verhindern.

6. Verfahren nach Anspruch 5, wobei das bestimmte Muster den Schritt des Umschaltens des der Behälterleitung zugeordneten Ventils (36) in den ersten Status umfasst, der es ermöglicht, dass das Quellfluid in die Quellleitung (43) einströmt.

7. Verfahren nach einem der Ansprüche 4 bis 6, wobei das bestimmte Muster den Schritt des Umschaltens des der Behälterleitung zugeordneten Ventils (34) in den ersten Status umfasst, der es ermöglicht, dass das Behälterfluid in die Behälterleitung (45) einströmt.

8. Verfahren nach einem der Ansprüche 4 bis 7, wobei das bestimmte Muster den Schritt des Umschaltens des der Quellleitung zugeordneten Ventils (34) in den zweiten Status und des Umschaltens des der Behälterleitung zugeordneten Ventils (36) in den ersten Status umfasst, um eine vorbestimmte Menge des Quellfluids in die Quellleitung (43) hineinspülen zu lassen, das dadurch das verbleibende Behälterfluid in die Quellleitung (43) verdrängt, insbesondere in einen Teil (54) der Quellleitung (43) und/oder den Schritt des Zurückschaltens des der Quellleitung zugeordneten Ventils (34) in den ersten Status und des Umschaltens des der Behälterleitung zugeordneten Ventils (36) in den zweiten Status, um das Behälterfluid in die Behälterleitung (45) hineinspülen zu lassen, um zu erreichen, dass die Behälterleitung (45) und ein Teil (54) der Quellleitung (43) mit dem Behälterfluid befüllt wird.

9. Verfahren nach einem der Ansprüche 5 bis 8, wobei das bestimmte Muster den Schritt des Öffnens des der Behälterleitung zugeordneten Ventils (36) und des Öffnens des der Quellleitung zugeordneten Ventils (34) nacheinander umfasst, um das Quellfluid in die Behälterleitung (45) bzw. die Quellleitung (43) spülen zu lassen, um den normalen Gebrauch der Fluidverteilervorrichtung (12) zu beginnen.

10. Verfahren nach Anspruch 9, wobei eine vorbestimmte Menge des Quellfluids durch kurzzeitiges, insbesondere nur wenige Sekunden dauerndes Öffnen des der Behälterleitung zugeordneten Ventils (36) gesteuert wird.

11. Verfahren nach einem der Ansprüche 4 bis 10, wobei das Verfahren den Schritt des Bereitstellens eines Behälters (20) umfasst, der ein Reinigungsfluid, insbesondere ein Desinfektionsfluid, umfasst.

## Revendications

1. Agencement de conduits (10) d'un dispositif de distribution de fluides (12), l'agencement de conduits (10) comprenant :
- un conduit pour fluide source (43) et une sortie (46),
- un conduit pour fluide de conteneur (45) afin de guider un fluide de conteneur entrant à travers une entrée pour fluide de conteneur (44) jusqu'à ladite sortie (46),
- une entrée pour fluide source (42) connectée audit conduit pour fluide source (43) afin de guider un fluide source entrant à travers l'entrée pour fluide source (42) jusqu'à ladite sortie (46),
- ladite entrée pour fluide de conteneur (44) étant connectée audit conduit à fluide de conteneur (45),
- une entrée pour fluide gazeux (47) qui est en connexion fluidique avec le conduit pour fluide de conteneur (45) afin de guider un fluide gazeux entrant à travers l'entrée pour fluide gazeux (47) jusqu'à une entrée du conteneur (20) pour libérer le fluide de conteneur jusque dans le conduit pour fluide de conteneur (45),
- une pluralité de vannes incluant au moins une vanne (34) associée avec le conduit pour fluide source et une vanne (36) associée avec le conduit pour fluide de conteneur, chaque vanne ayant un premier état et un second état, et
un contrôleur (18) configuré pour commuter chacune des vannes (32, 34, 36) depuis le premier état vers le second état et vice versa pour permettre ou pour empêcher, respectivement, au fluide de conteneur ou au fluide source d'entrer dans le conduit correspondant (43, 45), dans laquelle
le contrôleur (18) est configuré
a) pour fonctionner dans un mode d'utilisation normale, dans lequel la pluralité de vannes (32, 34, 36) sont commutées de telle façon que le dispositif de distribution de fluide (12) est utilisable pour une utilisation normale, dans lequel, pendant une utilisation normale au moins un conduit (43, 45) est destiné à guider un écoulement de liquide via au moins une pièce à main (16), et au moins un conduit (43, 45) est destiné à guider un écoulement de second liquide et/ou un écoulement de poudre vers ladite au moins une pièce à main (16), ou
b) pour fonctionner dans un mode de nettoyage, dans lequel la pluralité de vannes (32, 34, 36) sont commutées de telle façon que le dispositif de distribution de fluide (12) est utilisable dans un mode de nettoyage afin de nettoyer les conduits (43, 45), et
dans laquelle un conteneur (20, 26), comprenant un fluide de conteneur, est susceptible d'être connecté à l'entrée de conteneur (44), et
**caractérisé en ce qu'**en connectant le conteneur (20, 26) à l'entrée de conteneur (44), les vannes (32, 34, 36) sont automatiquement commutées vers le premier état pour permettre un écoulement du fluide de conteneur pendant l'utilisation normale jusque dans le conduit de conteneur.

2. Agencement de conduits (10) selon la revendication 1,
dans lequel la pluralité de vannes (32, 34, 36) comprennent des vannes électroniques pour permettre une commutation des vannes (32, 34, 36) par le contrôleur (18).

3. Agencement de conduits (10) selon l'une des revendications précédentes,
dans lequel le dispositif de distribution de fluide (12) comprend une pédale (24) pour entrer au moins un ordre vers le contrôleur (18).

4. Procédé pour nettoyer un agencement de conduits (10) d'un dispositif de distribution de fluide selon l'une des revendications 1 à 3, dans lequel le procédé pour nettoyer l'agencement de conduits (10) comprend les étapes consistant à :
connecter ladite entrée pour fluide de conteneur (44) de l'agencement de conduits (10) avec un conteneur (20) fournissant un fluide de conteneur vers un conduit de conteneur (45),
connecter ladite entrée pour fluide source (42) de l'agencement de conduits (10) avec une source fournissant un fluide source vers ledit conduit de source (43), et
connecter ladite entrée pour fluide gazeux (47) de l'agencement de conduits (10) avec le conduit pour fluide de conteneur (45) afin de guider un fluide gazeux entrant à travers l'entrée pour fluide gazeux (47) jusqu'à une entrée du conteneur (20) pour libérer le fluide de conteneur jusque dans le conduit pour fluide de conteneur (45), en activant un mode de nettoyage stocké dans ledit contrôleur (18), dans lequel le contrôleur (18) est configuré pour commuter la pluralité de vannes (32, 34, 36), chacune étant associée avec l'un au moins des conduits (43, 45), de telle façon que le fluide de conteneur est rincé jusque dans le conduit de conteneur (45) et au moins partiellement jusque dans le conduit de source (43) l'un après l'autre en accord avec un certain motif.

5. Procédé selon la revendication 4, dans lequel les vannes (32, 34, 36) peuvent être commutées entre un premier état et un second état et vice versa pour permettre ou pour empêcher un écoulement de fluide.

6. Procédé selon la revendication 5, dans lequel le certain motif comprend l'étape consistant à commuter la vanne (36) associée au conduit de conteneur vers le premier état, permettant au fluide source d'entrer jusque dans le conduit de source (43).

7. Procédé selon l'une des revendications 4 à 6, dans lequel le certain motif comprend l'étape consistant à commuter la vanne (34) associée au conduit de source vers le premier état, permettant au fluide de conteneur d'entrer jusque dans le conduit de conteneur (45).

8. Procédé selon l'une des revendications 4 à 7, dans lequel le certain motif comprend l'étape consistant à commuter la vanne (34) associée au conduit de source vers le second état et à commuter la vanne (36) associée au conduit de conteneur vers le premier état afin de laisser passer une quantité prédéterminée du fluide source jusque dans le conduit de source (43), qui rince de ce fait le fluide de conteneur restant jusque dans le conduit de source (43), en particulier jusque dans une partie (54) du conduit de source (43) et/ou l'étape consistant à commuter en retour la vanne (34) associée au conduit de source vers le premier état et à commuter la vanne (36) associée au conduit de conteneur vers le second état afin de rincer le fluide de conteneur jusque dans le conduit de conteneur (45), afin d'obtenir que le conduit de conteneur (45) et une partie (54) du conduit de source (43) soient remplis avec le fluide de conteneur.

9. Procédé selon l'une des revendications 5 à 8, dans lequel le certain motif comprend l'étape consistant à ouvrir la vanne (36) associée au conduit de conteneur et à ouvrir la vanne (34) associée au conduit de source l'une après l'autre afin de rincer le fluide de source jusque dans le conduit de conteneur (45) et le conduit de source (43) respectivement pour démarrer l'utilisation normale du dispositif de distribution de fluide (12).

10. Procédé selon la revendication 9, dans laquelle une quantité prédéterminée du fluide source est commandée en ouvrant la vanne (36) associée au conduit de conteneur pendant un temps bref, en particulier pendant seulement quelques secondes.

11. Procédé selon l'une des revendications 4 à 10, dans lequel le procédé comprend l'étape consistant à fournir un conteneur (20) comprenant un fluide de nettoyage, en particulier un fluide désinfectant.
